(19) Europäisches Patentamt
European Patent Office
Office européen des brevets

(11) EP 2 673 351 B1

# (12) EUROPEAN PATENT SPECIFICATION

(45) Date of publication and mention of the grant of the patent:
**29.06.2016 Bulletin 2016/26**

(21) Application number: **12744555.9**

(22) Date of filing: **10.02.2012**

(51) Int Cl.:
***C08J 9/12*** *(2006.01)* ***C08F 212/08*** *(2006.01)*
***C08J 9/04*** *(2006.01)* ***C08L 25/14*** *(2006.01)*
***C08J 9/00*** *(2006.01)* ***C08J 9/14*** *(2006.01)*

(86) International application number:
**PCT/US2012/024584**

(87) International publication number:
**WO 2012/109505 (16.08.2012 Gazette 2012/33)**

## (54) POLAR POLYSTYRENE COPOLYMERS FOR ENHANCED FOAMING

POLARE POLYSTYROLCOPOLYMERE FÜR VERBESSERTE SCHÄUMUNG

COPOLYMÈRES POLAIRES DE POLYSTYRÈNE POUR MOUSSAGE AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2011 US 201161441389 P**
**11.01.2012 US 201213347706**

(43) Date of publication of application:
**18.12.2013 Bulletin 2013/51**

(73) Proprietor: **Fina Technology, Inc.**
**Houston, TX 77267-4412 (US)**

(72) Inventors:
- **WANG, Wei**
**League City, TX 77573 (US)**
- **KNOEPPEL, David, W.**
**League City, TX 77573 (US)**
- **GREENBERG, Melissa**
**Katy, TX 77449 (US)**

(74) Representative: **Raboin, Jean-Christophe et al**
**Total Research & Technology Feluy**
**Zone Industrielle C**
**7181 Seneffe (BE)**

(56) References cited:
**US-A- 4 351 910** **US-A- 4 448 933**
**US-A- 5 010 111** **US-A1- 2007 157 948**
**US-A1- 2008 108 718** **US-A1- 2009 069 455**
**US-A1- 2009 234 035**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 673 351 B1

## Description

### CROSS-REFERENCE TO RELATED APPLICATIONS

Not applicable.

### FIELD

The present invention is generally related to polymeric compositions. More specifically, the present invention is related to foamed polystyrene blends.

### BACKGROUND

Styrene, also known, as vinyl benzene, is an aromatic compound that is produced in industrial quantities from ethylbenzene. The most common method of styrene production comprises the dehydrogenation of ethylbenzene, which produces a crude product of styrene monomer and unreacted ethylbenzene and hydrogen. Polystyrene is an aromatic polymer produced from the styrene monomer. Polystyrene is a widely used polymer found in insulation, packaging, and disposable cutlery, as well as foamed products including foam cups.

Different types of polystyrene materials can include general purpose polystyrene (GPPS), high impact polystyrene (HIPS), and transparent impact polystyrene (TIPS). Many conditions affect the properties of the resulting product, including processing time, temperature, pressure, purity of the monomer feedstock, and the presence of additives or other compounds. These and other processing conditions alter the physical and chemical properties of the polystyrene product, affecting the suitability for a desired use.

Foamed polystyrene offers the advantages of low cost and high structural strength for its density. A typical polystyrene foam also has a relatively high impact resistance and possesses excellent electrical and thermal insulation characteristics. Foamed polystyrene is useful in a variety of applications such as insulation, packaging, coolers, food packaging, decorative pieces, and dunnage. Additionally, polystyrene foams are commonly classified into three general categories: low density, medium density, and high density. Low density polystyrene foams usually have a density of from about 1 to about 3 lb/ft$^3$ whereas medium density foams may have a density ranging from about 4 to about 19 lb/ft$^3$ and high density foams often have a density ranging from 20 to about 30 lb/ft$^3$.

The two main types of polystyrene foam are extruded polystyrene foam and expanded polystyrene foam. Extruded polystyrene foam is typically formed by mixing polystyrene with additives and a blowing agent into an extruder that heats the mixture. The mixture is then extruded, formed to the desired shape, and cooled. Expanded polystyrene foam is typically formed by expanding solid polystyrene beads containing a blowing agent such as pentane with steam or hot gas to form expanded polystyrene beads. These beads may later be molded into the desired shape and expanded again with steam or hot gas to fuse the beads together.

In the production of foamed polystyrene, it is common to utilize blowing agents such as methyl chloride, ethyl chloride, chlorocarbons, fluorocarbons (including HFCs) and chlorofluorocarbons (CFCs). However, such blowing agents have been heavily regulated due to potential environmental impact. Many of these traditional and current physical blowing agents are halogenated compounds, which demonstrate a high solubility in polar polymers. An ongoing trend in foaming process development is to find environmentally benign chemicals as blowing agents. Some foaming processes have been using carbon dioxide ($CO_2$) as the blowing agent or co-blowing agent. The advantages of using $CO_2$ include low cost, minimal environmental impact, and eliminating potential fire hazards. It has therefore been desirable to use carbon dioxide as a blowing agent from both environmental and economic standpoints.

However, carbon dioxide has presented problems when used as a blowing agent. Carbon dioxide has been found to have a relatively low solubility in styrenic polymer melts. The low solubility results in high extrusion pressures, which increases costs and reduces quality. The low solubility also results in a higher density product. For example, the solubility of $CO_2$ in polystyrene is about 6 wt% at 120 bars and 180°C. Under these conditions $CO_2$ is a supercritical fluid. It would thus be desirable to increase the wt% of $CO_2$ in the styrenic polymer melt. It would also be desirable to obtain a polystyrene product having a high carbon dioxide solubility in order to reduce costs and increase product quality.

### SUMMARY

The present invention is expandable polystyrene that includes a styrenic co-polymer resulting from polymerization of a reaction mixture of a styrenic monomer, a co-monomer having a polar functional group, and a blowing agent.

In a non-limiting embodiment, either by itself or in combination with any other aspect of the invention, the styrenic monomer can be selected from the group consisting of styrene, alpha-methyl styrene, vinyl toluene, p-methyl styrene, t-butyl styrene, o-chlorostyrene, vinyl pyridine, and any combinations thereof, and can be present in amounts

ranging from 80 to 99.9 wt% based on the total weight of the expandable polystyrene.

In a non-limiting embodiment, either by itself or in combination with any other aspect of the invention, the co-monomer can be selected from the group consisting of hydroxyethylmethacrylate (HEMA), esters, caprolactone acrylate, alkyl methacrylate, ethers, carboxylic acid, silane, fluorinated monomers, and oxygen-containing monomers, and combinations thereof, and can be present in amounts ranging from 0.5 to 10 wt% based on the total weight of the reaction mixture.

The blowing agent is carbon dioxide ($CO_2$) and can be present in the styrenic co-polymer in a weight proportion ranging from 1 to 30 parts per 100 parts of styrenic material.

The present invention includes polystyrene obtained from the expandable polystyrene and any article made from the polystyrene of any embodiment disclosed herein.

Other possible embodiments include two or more of the above aspects of the invention. In an embodiment the method includes all of the above aspects and the various procedures can be carried out in any order.

## BRIEF DESCRIPTION OF DRAWINGS

Figure 1 is a graph illustrating polylactic acid (PLA) particle size distribution from PLA blends with various polystyrene copolymers.
Figure 2 is a graph illustrating PLA particle size distribution from PLA blends modified with styrene-maleic anhydride (SMA).
Figure 3 is a graph illustrating the effect of HEMA concentration on polystyrene molecular weight.
Figure 4 is a graph illustrating the glass transition temperature of caprolactone functional polystyrene in various amounts in comparison to various amounts of HEMA-modified polystyrene and glycidyl methacrylate (GMA)-modified polystyrene.
Figure 5 is a diagram illustrating the experimental scheme of dynamic gravimetric measurement of $CO_2$ solubility.
Figure 6 is a graph of $CO_2$ desorption versus $CO_2$ solubility.
Figure 7 is a graph of $CO_2$ desorption versus normalized $CO_2$ solubility.

## DETAILED DESCRIPTION

The present invention includes styrenic copolymers and polymer blends. The present invention includes styrenic copolymers of polystyrene and a second monomer containing a polar functional group. The present invention includes a foamed polymeric component containing a base polystyrene material and at least one monomer containing a polar functional group.

In an embodiment, the blend of the present invention includes a styrenic polymer. In another embodiment, the styrenic polymer includes polymers of monovinylaromatic compounds, such as styrene, alpamethyl styrene and ring-substituted styrenes. The styrenic polymer includes a copolymer of polystyrene. Styrenic monomers for use in the styrenic polymer composition can be selected from the group of styrene, alpha-methyl styrene, vinyl toluene, p-methyl styrene, t-butyl styrene, o-chlorostyrene, vinyl pyridine, and any combinations thereof. The styrenic polymeric component in the blend of the present invention can be produced by any known process.

The blend of the present invention may contain any desired amounts of a styrenic polymer. In an embodiment, the blend contains at least 50 wt% of a styrenic polymer. In another embodiment, the blend contains a styrenic polymer in amounts ranging from 1 to 99 wt%, 50 to 95 wt%, 60 to 92 wt%, and optionally 70 to 90 wt%. In a further embodiment, the blend contains a styrene polymer in amounts ranging from 80 to 99 wt%. In an even further embodiment, the blend contains a styrenic polymer in amounts ranging from 90 to 95 wt%.

The styrenic polymer of the present invention may be formed by co-polymerizing a first monomer with a second monomer. The first monomer and the second monomer may be copolymerized by having the first monomer and the second monomer present in a reaction mixture that is subjected to polymerization conditions. The first monomer may include monovinylaromatic compounds, such as styrene, alpha-methyl styrene and ring-substituted styrenes. In an embodiment, the first monomer is selected from the group of styrene, alpha-methyl styrene, vinyl toluene, p-methyl styrene, t-butyl styrene, o-chlorostyrene, vinyl pyridine, and any combinations thereof. In another embodiment, styrene is used exclusively as the first monomer. In an embodiment, the first monomer is present in the reaction mixture in amounts of at least 50 wt% of the reaction mixture. In another embodiment, the first monomer is present in the reaction mixture in amounts ranging from 80 to 99.9 wt% of the reaction mixture. In a further embodiment, the first monomer is present in the reaction mixture in amounts ranging from 90 to 99 wt%. Embodiments of the second monomer can be any suitable monomer capable of polymerization to form a styrenic copolymer. Examples of suitable second monomers can include certain acrylates, methacrylates, acetates, esters, ethers, and combinations thereof.

The present invention includes at least one second monomer containing a polar functional group. The second monomer containing a polar functional group may also be referred to herein as a "polar monomer". In an embodiment, the polar monomer is a polar vinyl functional monomer. In another embodiment, the polar monomer is selected from the group of hydroxyethylmethacrylate (HEMA), vinyl acetate, esters, caprolactone acrylate, ethers, carboxylic acid, silane, fluorinated monomers, and oxygen-containing monomers, and combinations thereof. In a further embodiment, the polar monomer is selected from the group of caprolactone acrylate, vinyl acetate, and HEMA, and combinations thereof. In an even further embodiment, the polar monomer is HEMA. In another embodiment the second monomer may be selected from the group of maleic anhydride (MAH), butyl acrylate, butyl methacrylate, and combinations thereof.

The styrenic polymer of the present invention may be prepared by polymerizing a reaction mixture containing a first monomer and a second monomer having a polar functional group. The first monomer and second monomer may be present in the reaction mixture in any desired amounts. In an embodiment, the second monomer is present in the reaction mixture in amounts of at least 0.1 wt% of the reaction mixture. In another embodiment, the second monomer is present in the reaction mixture in amounts of less than 10 wt% of the reaction mixture. The second monomer is present in the reaction mixture in amounts ranging from 1 to 20 wt%. In an embodiment, the second monomer is present in the reaction mixture in amounts ranging from 2 to 10 wt%. In a further embodiment, the second monomer is present in the reaction mixture in amounts ranging from 5 to 10 wt%.

In an embodiment, the weight ratio of first monomer to second monomer in the reaction mixture is at least 100:1. In another embodiment, the weight ratio of first monomer to second monomer in the reaction mixture ranges from 50:1 to 5:1. In a further embodiment, the weight ratio of first monomer to second monomer in the reaction mixture ranges from 20:1 to 9:1. In an even further embodiment, the weight ratio of first monomer to second monomer in the reaction mixture ranges from 17:1 to 10:1.

The polymerization of the styrenic monomer and the polar co-monomer may be carried out using any method known to one having ordinary skill in the art or performing such polymerizations. In an embodiment, the polymerization may be carried out by using a polymerization initiator. In an embodiment, the polymerization initiators include but are not limited to perketals, hydroperoxides, peroxycarbonates and the like. In another embodiment, the polymerization initiators may be selected from the group of benzoyl peroxide, lauroyl peroxide, t-butyl peroxybenzoate, and 1,1-di-t-butylperoxy-2,4-di-t-butylcyclohexane, and combinations thereof. In an embodiment, the amount of the polymerization initiator is from 0.01 to 1.0 wt% of the reaction mixture. In another embodiment, the amount of the polymerization initiator is from 0.01 to 0.5 wt% of the reaction mixture. In a further embodiment, the amount of the polymerization initiator is from 0.025 to 0.05 wt% of the reaction mixture.

Any process capable of processing or polymerizing styrenic monomers may be used to prepare the styrenic co-polymer of the present invention. In an embodiment, the polymerization reaction to prepare the styrenic co-polymer may be carried out in a solution or mass polymerization process. Mass polymerization, or bulk polymerization, refers to the polymerization of a monomer in the absence of any medium other than the monomers and a catalyst or polymerization initiator. Solution polymerization refers to a polymerization process in wherein the monomers and polymerization initiators are dissolved in a non-monomeric liquid solvent at the beginning of the polymerization reaction.

The polymerization may be either a batch process or a continuous process. In an embodiment, the polymerization reaction may be carried out using a continuous production process in a polymerization apparatus including a single reactor or multiple reactors. The styrenic polymer composition can be prepared using an upflow reactor, a downflow reactor, or any combinations thereof. The reactors and conditions for the production of a polymer composition, specifically polystyrene, are disclosed in U.S. Patent No. 4,777,210.

The temperature ranges useful in the polymerization process of the present disclosure can be selected to be consistent with the operational characteristics of the equipment used to perform the polymerization. In an embodiment, the polymerization temperature ranges from 90 to 240°C. In another embodiment, the polymerization temperature ranges from 100 to 180°C. In yet another embodiment, the polymerization reaction may be carried out in multiple reactors in which each reactor is operated under an optimum temperature range. For example, the polymerization reaction may be carried out in a reactor system employing a first polymerization reactor and a second polymerization reactor that may be either continuously stirred tank reactors (CSTR) or plug-flow reactors. In an embodiment, a polymerization process for the production of a styrenic co-polymer of the type disclosed herein containing multiple reactors may have the first reactor (e.g., a CSTR), also referred to as a prepolymerization reactor, operated under temperatures ranging from 90 to 135°C while the second reactor (e.g. CSTR or plug flow) may be operated under temperatures ranging from 100 to 165°C.

In an embodiment, the polymerization of the styrenic co-polymer may include contacting a styrenic monomer over a molecular sieve. In an embodiment, the molecular sieve comprises a zeolite. The zeolite may include hydrated, crystalline metal aluminosilicates having a silica to alumina molar ratio ranging from 1:100 to 100:1. In an embodiment, the zeolites suitable for use in this disclosure include without limitation L-zeolite, X-zeolite, Y-zeolite, omega zeolite, beta zeolite, mordenite, faujasite, or combinations thereof.

In an alternative embodiment, the co-polymer may be obtained by polymerization in which heat is used as the

initiator. In a further embodiment, the co-polymer may be prepared using a non-conventional initiator such as a metallocene catalyst as is disclosed in U.S. Pat. No. 6,706,827 to Lyu, et al.. In one embodiment, the monomers may be admixed with a solvent and then polymerized. In another embodiment, one of the monomers is dissolved in the other and then polymerized. In still another embodiment, the monomers may be fed concurrently and separately to a reactor, either neat or dissolved in a solvent, such as mineral oil. In yet another embodiment, the second monomer may be prepared in-situ or immediately prior to the polymerization by admixing the raw material components, such as an unsaturated acid or anhydride and a metal alkoxide, in-line or in the reactor. Any process for polymerizing monomers having polymerizable unsaturation know to be useful to those of ordinary skill in the art in preparing such polymers may be used. For example, the process disclosed in U.S. Pat. No. 5,540,813 to Sosa, et al., may be used. The processes disclosed in U.S. Pat. No. 3,660,535 to Finch, et al., and U.S. Pat. No. 3,658,946 to Bronstert, et al., may be used. Any process for preparing general purpose polystyrene may be used to prepare the styrenic co-polymer of the present invention.

In certain embodiments, the styrenic copolymer may be admixed with additives prior to being used in end use applications. For example, the styrenic copolymer may be admixed with additives that include without limitation stabilizers, chain transfer agents, antioxidants, UV stabilizers, lubricants, plasticizers, ultra-violet screening agents, oxidants, antioxidants, antistatic agents, ultraviolet light absorbents, fire retardants, processing oils, mold release agents, fillers, pigments/dyes, coloring agents, and other similar compositions. Any additive known to those of ordinary skill in the art to be useful in the preparation of styrenic copolymers may be used. $CO_2$ solubility may increase for lower molecular weight polystyrene copolymer, therefore, it would be desirable to maintain or control the molecular weight of the styrenic copolymer. In an embodiment, chain transfer agents and/or diluents may be added before and/or during polymerization in order to help control the molecular weight of the resulting styrenic copolymer.

The obtained polystyrene copolymer may then be mixed with the blowing agent to obtain a polymeric blend containing the blowing agent. The polymeric blend containing the blowing agent may then be sent to an extruder or other step to obtain an end use article.

In an embodiment, styrene monomer is combined with a polar comonomer and a plasticizer and subsequently polymerized to form a polar polystyrene copolymer. The polar polystyrene copolymer can then be combined with blowing agents to obtain a blend. The final blend may then be sent to an extruder or other step to obtain an end use article. In an embodiment, the blowing agents may be added to the polystyrene containing composition during the extruding step.

Styrene monomer is combined with a second polar monomer and subsequently polymerized to form a polystyrene copolymer. The polystyrene copolymer is mixed with a blowing agent to obtain a blend. The final blend may then be sent to an extruder or other step to obtain an end use article. In an embodiment, the blowing agents may be added to the polystyrene containing composition during the extruding step.

The present invention may include foamed articles which may be formed by melting and mixing the styrenic copolymer blend of the invention to form a polymer melt, incorporating a blowing agent into the polymer melt to form a foamable blend, and extruding the foamable blend through a die to form the foamed structure. During melting and mixing, the polymeric material may be heated to a temperature at or above the glass transition temperature of the polymeric material. The melting and mixing of polymeric material and any additives may be accomplished by any means known in the art, including extruding, mixing, and/or blending. In an embodiment, a blowing agent is blended with molten polymeric material. The blending of the blowing agent with the molten polymeric material may be performed under atmospheric or elevated pressures.

In an embodiment, the blowing agent is incorporated into the styrenic copolymer in a weight proportion ranging from 1 to 30 parts per 100 parts of the polymeric material to be expanded. In another embodiment, the blowing agent is incorporated into the styrenic copolymer in a weight proportion ranging from 2 to 18 per 100 parts per polymeric material to be expanded. In a further embodiment, the blowing agent is incorporated into the styrenic copolymer in a weight proportion ranging from 4 to 12 parts per 100 parts per polymeric material to be expanded.

the blowing agents of the present invention is carbon dioxide ($CO_2$). In an embodiment, the blowing agent of the present invention is entirely composed of $CO_2$.

The foamable blend may be cooled after the blowing agent is incorporated into the styrenic blend to obtain the foamable blend. In an embodiment, the foamable blend is cooled to temperatures ranging from 30 to 150°C, optionally 75 to 150 °C. The cooled foamable blend may then be passed through a die into a zone of lower pressure to form an expanded blend, article, or other foamed structure. The use of the polystyrene copolymer can also be used for not only foams, but also for rigid blends.

The obtained expanded polystyrene copolymer may have any desired density. In an embodiment, the density of the expanded polystyrene copolymer ranges from 0.240 - 0.002 g/cm$^3$ (15 to 0.1 lbs/ft$^3$). In another embodiment, the density of the expanded polystyrene copolymer ranges from 0.160 - 0.008 g/cm$^3$ (10 to 0.5 lbs/ft$^3$). In a further embodiment, the density of the expanded polystyrene copolymer ranges from 0.048 - 0.010 g/cm$^3$ (3 to 0.6 lbs/ft$^3$).

An end use article may include a blend of the present invention. In an embodiment, the articles include films and thermoformed or foamed articles. For example, a final article may be thermoformed from a sheet containing the

blend. In another embodiment, the end use articles include foamed articles, which may have a foamed structure. In an embodiment, an article can be obtained by subjecting the polymeric composition to a plastics shaping process such as extrusion. The polymeric composition may be formed into end use articles including food packaging, food/beverage containers, polymeric foam substrate, foamed insulation, building insulation, protective head gear, toys, dunnage, and the like.

In an embodiment, the obtained polystyrene foam is a multicellular article having a plurality of cells that may be open or closed. In another embodiment, the majority of the cells are open. In a further embodiment, the majority of the cells are closed.

EXAMPLES

EXAMPLE 1

A series of polystyrene samples were made according to general crystal polystyrene batch conditions with the addition of polar modifiers as listed in Table 3 below. The polar modifiers listed in Table 3 include styrene-maleic anhydride (SMA) comonomers, including SMA® 1000P, SMA® 3000P, and SMA® EF80, which are all commercially available from Sartomer Company, Inc. The polar modifiers listed in Table 3 also include butyl acrylate, butyl methacrylate, hydroxyethylmethacrylate (HEMA), and maleic anhydride (MAH). The loading of modifiers is 5 wt%, except for maleic anhydride (MAH). The loading of MAH is limited to 3.5 wt% and, in a separate sample, 1.75 wt% due to its limited solubility in styrene. In Table 3, below, PDI represents polydispersity index wherein PDI=Mw/Mn, $Tg_1$ represents the first glass transition temperature and $Tg_2$ represents a second glass transition temperature, if applicable.

**TABLE 3:** Characterization of Modified Polystyrene

| Modifier | None | SMA 1000P (1:1) | SMA 3000P (3:1) | SMA EF80 (8:1) |
|---|---|---|---|---|
| wt% | 0 | 5.0 | 5.0 | 5.0 |
| mol(# of moles of polar monomer unit)/(100g of polymer) | 0 | 0.025 | 0.012 | 0.005 |
| Transparency | Clear | Opaque | Opaque | Opaque |
| $Tg_1$ | 105.2 | 104.8 | 104.5 | 104.4 |
| $Tg_2$ | n/a | 169.3 | n/a | n/a |
| Melt Flow Rate | 2.1 | 2.2 | 2.8 | 2.9 |
| Mn | 130,000 | 138,000 | 132,000 | 84,100 |
| Mw | 271,000 | 273,000 | 269,000 | 262,000 |
| Mz | 415,000 | 439,000 | 418,000 | 417,000 |
| PDI | 2.1 | 2.0 | 2.0 | 3.1 |
| Peak MW | 259,000 | 255,000 | 259,000 | 265,000 |

| Modifier | Butyl Acrylate | Butyl Methacrylate | HEMA | MAH | MAH |
|---|---|---|---|---|---|
| wt% | 5.0 | 5.0 | 5.0 | 1.75 | 3.5 |
| mol(# of moles of polar monomer unit)/(100g of polymer) | 0.039 | 0.035 | 0.038 | 0.018 | 0.036 |
| Transparency | Clear | Clear | Clear | Clear | Semi-clear |
| $Tg_1$ | 94.8 | 98.2 | 102.6 | 105.0 | 104.0 |
| $Tg_2$ | n/a | n/a | n/a | n/a | n/a |
| Melt Flow Rate | 3.3 | 2.9 | 1.7 | 2.2 | 3.3 |
| Mn | 136,000 | 122,000 | 128,000 | 115,000 | 97,300 |
| Mw | 284,000 | 260,000 | 312,000 | 250,000 | 220,000 |
| Mz | 433,000 | 398,000 | 529,000 | 391,000 | 350,000 |
| PDI | 2.1 | 2.1 | 2.4 | 2.2 | 2.3 |
| Peak MW | 271,000 | 250,000 | 270,000 | 239,000 | 212,000 |

An indicator of polarity change in polystyrene is how well the material blends with another polar polymer such as polylactic acid (PLA). In this experiment, the modified polystyrene samples above were blended with 5 wt% PLA in a mixer. The Haake mixer was operated under a temperature of 210°C under a nitrogen atmosphere for 3 minutes with agitation under speeds of 60 rpm. The resulting blends were opaque or clear as indicated in Table 3. The size of the PLA particles in the blends were evaluated by solution light scattering. The blend samples were dispersed in methyl ethyl ketone (MEK), a good solvent for polystyrene but not for PLA. Figure 1 and Figure 2 show the PLA particle size distribution from different polystyrene blends. Figure 1 compares polystyrene copolymerized with different comonomers. All of the polystyrene copolymer samples improve the dispersion of PLA to some degree when compared to crystal polystyrene. Incorporation of HEMA gave by far the best result with a relatively narrower distribution peaked at particle sizes of 0.5 $\mu$m. Similar but slightly worse results were obtained with polystyrene modified by butyl-acrylate/methacryates as well as maleic anhydride. Appearances of multiple maxima (or peaks) at 10 to 100 $\mu$m indicated a significant presence of large PLA domains in those blends.

Figure 2 compares polystyrene modified with different styrene-maleic anhydride copolymers (SMAs). The SMAs were incorporated into polystyrene during batch reactions as a way of physical blending. The PLA particle size distributions from the SMA blends did not seem to improve much compared to GPPS. The PLA particle size distributions from the SMA blends were much worse than polystyrene modified through copolymerization with polar comonomers. The SMAs were not as effective as polar comonomers due to the relatively lower molar concentration of polar groups of SMAs

under the same weight percentage loading (see Table 3 above). In addition, the SMAs containing the higher percentage of maleic anhydride (such as 1000P and 3000P) are less soluble in styrene. A miscible blend of GPPS and SMA was only made with SMA EF80, which has a styrene-to-maleic anhydride of 8:1 and contains the lowest concentration of maleic anhydride among the various SMAs used. Figure 2 also shows that the incorporation of HEMA achieved the best result with a relatively narrower particle size distribution peaked at particle sizes of 0.5 μm.

EXAMPLE 2

Hydroxyl functional polystyrene was prepared in a batch reaction process by copolymerizing styrene with 2-hydroxyethyl methacrylate (HEMA) at varied concentrations ranging from 0 to 5 wt.% in the feed (see Table 4). The polymerization reaction was carried out in a CSTR-type batch reactor. Lupersol-233 was added as the initiator with an initial concentration of about 170 ppm in the reaction mixture. The reaction was then run isothermally at 130°C with continuous agitation at 150 rpm for about 3 hours or until 75% conversion was obtained. The reaction mixture was then transferred onto an aluminum surface and devolatized under active vacuum of less than 10 torr at 225°C for 45 minutes. After devolatization, the resulting material had very good adhesion to the aluminum surface.

**Table 4:** Feed Formulations in Batch Synthesis of HEMA-modified polystyrene

| Run No. | 1 | 2 | 3 | 4 |
|---|---|---|---|---|
| Styrene (grams) | 200 | 198 | 195 | 185.4 |
| HEMA (grams) | 0 | 2 | 5 | 10.0 |
| SMA EF-80 | 0 | 0 | 0 | 4.6 |
| HEMA (%) | 0 | 1.0 | 2.5 | 5.0 |
| TOTAL (grams) | 200 | 200 | 200 | 200 |

The concentration effect of hydroxyl groups on polystyrene properties is shown in Table 5 below. The melt index of HEMA-modified polystyrene was reduced and the molecular weight of the polystyrene (especially, Mz) was increased as the concentration of HEMA increased, The addition of extra polar modifiers such as SMA EF80 seems to exacerbate this effect, as evident from the dramatic increase in Mz value shown in Figure 3. There appears to be a synergistic effect between HEMA and the polar additive to induce crosslinking, since the increase of Mz value with the addition of EF80 was much greater than that would be achieved with the addition of the same amount of co-monomers. The results suggest that the inter-chain, physical cross-linking through secondary interaction (e.g., hydrogen bonding) can be strengthened by the addition of a styrene-maleic anhydride copolymer, which has a lower molecular weight and thus faster relaxation than the polystyrene matrix.

**Table 5:** Characterization of HEMA-modified polystyrene

| HEMA (wt.%) | Mn ($g \cdot mol^{-1}$) | Mw ($g \cdot mol^{-1}$) | Mz ($g \cdot mol^{-1}$) | Mp ($g \cdot mol^{-1}$) | PDI Mw/Mn | MFI ($g \cdot 10min^{-1}$) | Tg (°C) |
|---|---|---|---|---|---|---|---|
| 0.0 | 129,000 | 269,000 | 408,000 | 260,000 | 2.1 | 2.2 | 104.4 |
| 1.0 | 135,000 | 329,000 | 515,000 | 309,000 | 2.4 | 1.1~2.5 | 104.1 |
| 2.5 | 142,000 | 336,000 | 523,000 | 315,000 | 2.4 | 1.9~2.3 | 103.2 |
| 5.0 | 127,000 | 355,000 | 584,000 | 320,000 | 2.8 | 0.3 | 103.1 |
| 5.0 + EF80 (2.3) | 106,000 | 485,000 | 1,053,000 | 299,000 | 4.6 | 0.1 | 103.4 |

EXAMPLE 3

Batch reactions were run to incorporate varied amounts of 0, 1, 2.5 and 5 wt% of caprolactone acrylate into polystyrene, according to the formulations shown in Table 6. The batch run conditions were the same as those for HEMA-modified polystyrene in Example 2. With caprolactone in the feed, the reaction appeared to drive up the viscosity significantly at early stage of the polymerization, particularly with 5 wt% of caprolactone in the feed. The resulting polystyrene had a strong tendency to climb the stir shaft and the reaction had to be stopped at a conversion of 50%. Similar phenomenon was observed with 2.5 wt% caprolactone acrylate but to a lesser extent. The reaction continued to finish at 62% conversion. In contrast, no such reaction issues were observed with HEMA as the co-monomer.

**Table 6:** Feed Formulations in Batch Synthesis of Caprolactone Functional Polystyrene

| Run No. | 1 | 2 | 3 | 4 |
|---|---|---|---|---|
| Styrene (g) | 200 | 198 | 195 | 190 |
| Caprolactone (g) | 0 | 2 | 5 | 10 |
| Caprolactone (wt%) | 0.0 | 1.0 | 2.5 | 5.0 |
| **TOTAL** | **200** | **200** | **200** | **200** |

The structure of caprolactone acrylate, as shown below, has a long alkyl/ester chain to extend hydroxyl functionality away from the vinyl group where polymerization with styrene occurs. The extended hydroxyl groups can afford more efficient polar interaction than HEMA where -OH groups are extended through a short ethyl link. In copolymers, the hydroxyl functionality in HEMA is structurally close to the backbone and can be hidden in the entanglement of styrenic chains. The enhanced polar interaction from caprolactone acrylate can raise the $CO_2$ solubility in copolymers while giving an enhancement of melt strength, both of which are desired properties for $CO_2$ foaming. The more efficient interaction from caprolactone may help reduce the amount of co-monomer needed for polystyrene modification.

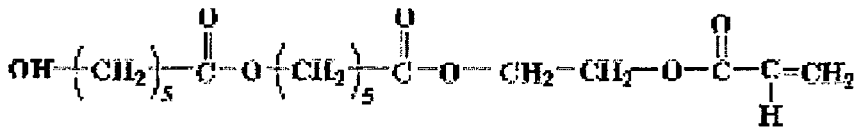

As shown in Table 7, the polystyrene copolymer with caprolactone had higher Mw and Mz values than HEMA copolymers at the same loading, despite their similar Mn values. The Mz value is especially sensitive to high molecular weight components and can be an indication of crosslinks. The values of Mw and Mz trended with the concentration of caprolactone co-monomer but reduced at a loading of 5 wt%.

**Table 7:** Comparison of Molecular Weights: Caprolactone vs. HEMA

| | Caprolactone | | | HEMA | | |
|---|---|---|---|---|---|---|
| Loading (wt%) | 1.0 | 2.5 | 5.0 | 1.0 | 2.5 | 5.0 |
| Mn($g \cdot mol^{-1}$) | 142,000 | 139,000 | 86,9000 | 135,000 | 142,000 | 127,000 |
| Mw($g \cdot mol^{-1}$) | 426,000 | 522,000 | 280,000 | 329,000 | 336,000 | 355,000 |
| Mz($g \cdot mol^{-1}$) | 860,000 | 1,144,000 | 639,000 | 515,000 | 523,000 | 584,000 |
| Mp($g \cdot mol^{-1}$) | 269,000 | 248,000 | 176,000 | 309,000 | 315,000 | 320,000 |
| Mw/Mn | 3.0 | 3.8 | 3.2 | 2.4 | 2.4 | 2.8 |

Despite its efficient polar interaction, the thermal analysis of caprolactone functional polystyrene showed drastic decrease in the glass transition temperature with concentration (see Table 8 and Figure 4). Normally, the enhanced polar interaction would be expected to strengthen inter-chain interactions, limit segmental freedom of polymer chains and thus inhibit the drop in glass transition temperature. For caprolactone, however, the drop in Tg was more significant than HEMA or GMA at a similar loading. Interestingly, the extended chain length of caprolactone actually plasticized the polystyrene matrix while facilitating polar interaction.

**Table 8**

| Polar Monomer (type) | Polar monomer (wt%) | $Tg_1$ (°C) |
|---|---|---|
| Caprolactone | 0 | 105 |
| Caprolactone | 1.0 | 99 |
| Caprolactone | 2.5 | 92 |

(continued)

| Polar Monomer (type) | Polar monomer (wt%) | $Tg_1$ (°C) |
|---|---|---|
| Caprolactone | 5.0 | 86 |
| HEMA | 0 | 105 |
| HEMA | 2.5 | 103.2 |
| HEMA | 5.0 | 103.1 |
| GMA | 0 | 105 |
| GMA | 1 | 104 |
| GMA | 2.5 | 103 |
| GMA | 5.0 | 103 |

EXAMPLE 4

**Measurement of $CO_2$ Solubility** The general scheme of measurement is illustrated in Figure 5. Polymer samples were molded into disks with a thickness of 1.4 mm and a diameter of 25 mm. The relatively large surface area on both sides of the disks ensures that the diffusion of gas occurs mainly in the normal direction of the disk planes. The sample disk was weighed ($M_{ini}$) and then transferred into a Parr pressure vessel, which was purged with $CO_2$ at least 3 times, subsequently heated to 50 °C and pressurized with carbon dioxide to 1,500 psi to reach a supercritical state. Both temperature and pressure were maintained for a period of time ($t_3$ in Figure 5) to allow $CO_2$ absorption into the sample disk. The pressure is then released instantaneously to atmosphere (at $t_4$). The sample disk is quickly taken from the pressure vessel and placed onto a moisture balance (Ohaus) to record the weight loss as a function of time. Reduction of sample weight was observed due to desorption of $CO_2$. The dynamic evolution of weight ($M_t$) was recorded by a computer and WinWedge program. The dynamic weight change of the sample disk recorded (after $t_5$) was used to calculate the $CO_2$ solubility as well as diffusivity with the aid of Fick's diffusion law and appropriate boundary conditions. The weight data recorded (after $t_5$) can be extrapolated to the initial weight (at $t_4$), prior to the depressurization, to obtain the $CO_2$ absorption concentration as well as the desorption rate of $CO_2$.

The amount of $CO_2$ remaining in the sample disk at any given moment can be represented by $M_{gas,t}$ and calculated according to equation: $M_{gas,t}$ = ($M_t$ - $M_{ini}$)/$M_{ini}$ X100%. The amount of $CO_2$ dissolved in a sample under equilibrium conditions is $M_{gas,0}$ at $t$ = 0, *i.e.*, right before the depressurization. $M_{gas,t}$ should drop as a function of time ($t$) and eventually approach zero when $t = \infty$.

To find the amount of $CO_2$ dissolved in the sample prior to the depressurization, one needs to extrapolate the data to $t$ = 0. Assuming a constant diffusion coefficient of $CO_2$, it can be shown from literature that $M_{gas,t}$ is a linear function of the square root of time:

$$M_{gas,t} = M_{gas,0} - \frac{4}{l} \bullet \sqrt{\frac{D \bullet t}{\pi}} \bullet M_{gas,0} \qquad \text{(Equation 1)}$$

where $l$ is the thickness of the sample disk and $D$ is the diffusion coefficient of $CO_2$. Use of this equation implicitly assumes uniformity of the initial gas concentration and homogeneity and isotropy of the sample structure. It also implies that the diffusion coefficient is constant regardless of the desorption time, gas concentration in the sample during desorption and temperature variation which could exist during the depressurization process. By making a linear plot of $M_{gas,t}$ vs. $t_{1/2}$, one can calculate $M_{gas,0}$ and $D$ from the intercept (at $t$ = 0) and slope, which corresponds to $CO_2$ solubility and diffusivity in the sample polymer, respectively.

The desorption diffusivities of $CO_2$ are on the order of $10^{-6}$ $cm^2$/sec. A temperature of 50 °C was used to be consistent with soaking temperature. The diffusivity data are higher than those reported in the literature ($10^{-7}$ $cm^2$/sec) where an ambient balance temperature was used.

**$CO_2$ Solubility in Modified PS** Dynamic $CO_2$ solubility measurements were conducted on an un-modified PS reference, commercial poly(styrene-co-acrylonitrile) (SAN) and a series of polarity-modified PS lab samples. Table 9 below lists the results by the name of co-monomers in the polystyrene copolymers. A plot of $CO_2$ diffusivity versus solubility of various samples was also constructed as shown in Figure 6.

Compared to the un-modified polystyrene, SAN showed significantly higher $CO_2$ solubility (15.6%) and lower $CO_2$ desorption diffusivity (1.1 x $10^{-7}$$cm^2$/s). The higher diffusivity in PS supports the previous assumption that $CO_2$

equilibrium should be reached faster in PS than that in SAN. The affinity of polar groups in SAN toward $CO_2$ may partially explain, from an enthalpy point of view, the enhanced (thermodynamic) solubility and slowed (kinetic) diffusivity. The swelling in $CO_2$ was small (<5% in thickness) for both SAN and PS.

Besides SAN, it is clear that all the polarity-modified PS copolymers show higher $CO_2$ solubility, more or less, when compared to the un-modified PS reference. The greatest $CO_2$ solubility enhancement was observed on 3-(trimethoxysilyl)propyl methacrylate-modified PS (Silyl-PS) with a 20% increase of solubility. This was followed by PS copolymerized with alkyl methacrylates or fluorinated acrylate. The fact that none of the samples has lower $CO_2$ solubility than the un-modified PS demonstrates the effectiveness of polarity-driven structural modification of PS for $CO_2$ solubility enhancement.

The high gas diffusivity is not desired for foaming processes as it has a negative impact on cell morphology control and can lead to accelerated gas exchange with air (foam aging). Among the different modified PS tested, there appear to be a few copolymers which actually show lower diffusivity than the un-modified PS reference. Examples include HEMA-, alkyl methacrylate- and caprolactone-modified PS. Commercial SAN has a very low $CO_2$ diffusivity of 1.1 $x10^{-7}cm^2/s$, despite its high $CO_2$ solubility. More understanding is needed for this material.

**Table 9:** $CO_2$ Solubility and Diffusivity in PS Copolymers (Conditions: 1500 psi, 50 °C)

| Sample | Boiling Point of Comonomer *(°C)* | $5_{CO2}$ {g per 100g polymer) | 0 ($10^{-7}cm^2sec^{-1}$) | Swell%(by thickness) | $T_g$/°C | MI (g/10min) | Mn | Mw | Mz | Mw/Mn | Mp |
|---|---|---|---|---|---|---|---|---|---|---|---|
| PS Ref. | 145 | 10.1 | 2.8 | 5% | 104 | 2.2 | 129,000 | 269,000 | 308,000 | 2.1 | 260,000 |
| SAN 25 wt.% | 77 | 15.6 | 1.1 | 4% | 105 | | | 165000* | | | |
| HEMA 5% | 198 | 10.7 | 1.9 | 3% | 103 | 0.3 | 127,000 | 355,000 | 584,000 | 2.8 | 320,000 |
| HEMA 2.5% | 198 | 11.0 | 2.6 | 7% | 103 | 1.9 | 142,000 | 336,000 | 523,000 | 2.4 | 315,000 |
| GMA 5% | 189 | 11.0 | 3.0 | 4% | 101 | 2.4 | 125,000 | 277,000 | 435,000 | 2.2 | 261,000 |
| Butyl MA 5% | 163 | 11.4 | 2.3 | 2% | 98 | 2.9 | 122,000 | 260,000 | 398,000 | 2.1 | 250,000 |
| Isodecyl MA 5% | 220 | 11.7 | 2.8 | 13% | 94 | 3.0 | 141,000 | 362,000 | 668,000 | 2.6 | 273,000 |
| Flurinated 5% | 120 | 11.7 | 3.0 | 12% | 96 | n/a | 125,000 | 265,000 | 409,000 | 2.1 | 252,000 |
| Silyl 2.5% | 255 | 10.2 | 3.5 | 6% | 101 | 2.6 | 128,000 | 298,000 | 493,000 | 2.3 | 260,000 |
| Silyl 5% A | 255 | 12.1 | 5.8 | 36% | 97 | n/a | 132,000 | 335,000 | 630,000 | 2.5 | 261,000 |
| Silyl 5% B | 255 | 11.0 | 3.4 | 12% | 98 | 1.2 | 139,000 | 479,000 | 1,141,000 | 3.4 | 270,000 |
| Caprolactone 2.5% | 266 | 10.8 | 2.2 | 9% | 92 | n/a | 139,000 | 522,000 | 1,144,000 | 3.8 | 248,000 |
| PEG350 MA 5% | 141 (15 mmHg) | 11.4 | n/a | n/a | 81 | 0.3 | 69,000 | 363,000 | 1,107,000 | 5.6 | 167,000 |
| PEG550 MA 5% | 141(15 mmHg) | 11.0 | 5.0 | 30% | 80 | 4.4 | 106,000 | 334,000 | 681,000 | 3.2 | 242,000 |

As shown in **Table** 9, the silane-modified PS at the same (5 wt. %) co-monomer concentration can have different $CO_2$ solubility and diffusivity. The sample Silyl A has higher $CO_2$ solubility and correspondingly higher diffusivity than the sample B, despite the same co-monomer concentration in polystyrene. Notice that the sample B has significantly higher Mz value (~1.1 million) than the sample A, too much crosslinking in polymers may have limited the gas solubility although the decrease of gas diffusivity seems beneficial.

The measured $CO_2$ solubility data have indicated enhanced $CO_2$ solubility when the polar co-monomers of various concentrations are incorporated into polystyrene. To compare the modifier efficiency in $CO_2$ solubility improvement, the portion of $CO_2$ solubility contributed by the co-monomer was normalized based on the weight. The normalized data (Table 10 and Figure 7) showed that the silyl methacrylate and HEMA were more effective to boost $CO_2$ solubility than other co-monomers. Interestingly, acrylonitrile had only moderate efficiency on $CO_2$ solubility enhancement, comparable to isodecyl- and fluorinated acrylates.

**Table 10**: Normalized $CO_2$ Solubility and Diffusivity in PS Copolymers (Conditions: 1500 psi, 50°C)

| Sample | $S_{CO2}$ (g per 100g polymer) | Solubility Contribution - Comonomer($S_{CO2\text{-}extra}$) | $S_{CO2\text{-}extra}$ / Mass of Comonomer | $D$ ($10^{-7}$ $cm^2$ $sec^{-1}$) |
|---|---|---|---|---|
| PS Ref. | 10.1 | 0.0 | 0.10 | 2.8 |
| SAN 25 wt.% | 15.6 | 8.0 | 0.32 | 1.1 |
| HEMA 5% | 10.7 | 1.1 | 0.22 | 1.9 |
| HEMA 2.5% | 11.0 | 1.2 | 0.46 | 2.6 |
| GMA 5% | 11.0 | 1.4 | 0.28 | 3.0 |
| Butyl MA 5% | 11.4 | 1.8 | 0.36 | 2.3 |
| Isodecyl MA 5% | 11.7 | 2.1 | 0.42 | 2.8 |
| Flurinated 5% | 11.7 | 2.1 | 0.42 | 3.0 |
| Silyl 2.5% | 10.2 | 0.4 | 0.14 | 3.5 |
| Silyl 5% A | 12.1 | 2.5 | 0.50 | 5.8 |
| Silyl 5% B | 11.0 | 1.4 | 0.28 | 3.4 |
| Caprolactone 2.5% | 10.8 | 1.0 | 0.38 | 2.2 |
| PEG350 MA 5% | 11.4 | 1.8 | 0.36 | n/a |
| PEG550 MA 5% | 11.0 | 1.4 | 0.28 | 5.0 |

With both diffusivity and normalized solubility considered, there appeared to be a few co-monomers which achieved a good balance of diffusivity and solubility. Examples included the caprolactone, butyl and hydroxyethyl methacrylate modified PS. The $CO_2$ solubility improvement in these modified PS exceeded that in SAN while the diffusivity was well contained to be below that in the un-modified PS. Commercial SAN has a very low $CO_2$ diffusivity of $1.1 \times 10^{-7}$ $cm^2/s$, despite its high $CO_2$ solubility.

Results clearly demonstrate that the presence of polar groups in polystyrene can lead to a higher $CO_2$ solubility. A $CO_2$ solubility enhancement as high as 20% is observed in silylmethacrylate modifed PS.

As used herein, the term "monomer" refers to a relatively simple compound, usually containing carbon and of low molecular weight, which can react by combining one or more similar compounds with itself to produce a polymer.

As used herein, the term "co-monomer" refers to a monomer that is copolymerized with at least one different monomer in a copolymerization reaction resulting in a copolymer.

As used herein, the term "homopolymer" refers to a polymer resulting from polymerization of a single monomer species.

As used herein, the term "co-polymer," also known as a "heteropolymer," is a polymer resulting from polymerization of two or more monomer species.

As used herein, the term "copolymerization" refers to the simultaneous polymerization of two or more monomer

species.

As used herein, the term "polymer" generally includes, but is not limited to homopolymers, co-polymers, such as, for example, block, graft, random and alternating copolymers, and combinations and modifications thereof.

As used herein, the terms "Continuous Stirred Tank Reactor," "Continuously Stirred Tank Reactor" and "CSTR," refer to a tank which has a rotor that stirs reagents within the tank to ensure proper mixing, a CSTR can be used for a variety of reactions and processes and is generally known in the art.

Use of the term "optionally" with respect to any element of a claim is intended to mean that the subject element is required, or alternatively, is not required. Both alternatives are intended to be within the scope of the claim. Use of broader terms such as comprises, includes, having, etc. should be understood to provide support for narrower terms such as consisting of, consisting essentially of, comprised substantially of, etc.

Depending on the context, all references herein to the "invention" may in some cases refer to certain specific embodiments only. In other cases it may refer to subject matter recited in one or more, but not necessarily all, of the claims.

## Claims

1. An expandable polystyrene comprising:

   a styrenic co-polymer resulting from polymerization of a reaction mixture comprising a styrenic monomer and a co-monomer comprising a polar functional group, wherein the co-monomer comprising a polar functional group is present in amounts ranging from 0.01 to 20 wt% based on the total weight of the reaction mixture; and $CO_2$ as a blowing agent.

2. The expandable polystyrene of claim 1, wherein the styrenic monomer is selected from the group consisting of styrene, alpha-methyl styrene, vinyl toluene, p-methyl styrene, t-butyl styrene, o-chlorostyrene, vinyl pyridine, and any combinations thereof.

3. The expandable polystyrene of claim 1, wherein the co-monomer comprising a polar functional group is a polar monomer selected from the group consisting of HEMA, esters, caprolactone acrylates, alkyl methacrylates, ethers, carboxylic acids, silanes, 3-(trimethoxysilyl)propyl methacrylate, fluorinated monomers, oxygen-containing monomers, maleic anhydride (MAH), butyl acrylate, butyl methacrylate and combinations thereof, preferably wherein the co-monomer comprising a polar functional group comprise HEMA.

4. The expandable polystyrene of claim 1, wherein the styrenic copolymer is present in amounts ranging from 80 to 100 wt% based on the total weight of the expandable polystyrene,

5. The expandable polystyrene of claim 1, wherein the blowing agent is incorporated into the expandable polystyrene in a weight proportion ranging from 1 to 30 parts per 100 parts of the styrenic material.

6. A polystyrene obtained from the expandable polystyrene of claim 1, which is preferably made into an article.

7. A method of making a polar polystyrene comprising:

   combining a styrene monomer and a polar co-monomer to obtain a reaction mixture, wherein the polar co-monomer is added to the reaction mixture in amounts ranging from 0.01 to 20 wt% based on the total weight of the reaction mixture;
   subjecting the reaction mixture to polymerization conditions to obtain a styrenic copolymer; and
   combining the styrenic co-polymer with a blowing agent to obtain a foamable blend.

8. The method of claim 7, wherein the polar co-monomer is selected from the group consisting of HEMA, esters, caprolactone acrylate, maleic anhydride (MAH), butyl acrylate, butyl methacrylate, alkyl methacrylates, ethers, 3-(trimethoxysilyl)propyl methacrylate, carboxylic acids, silanes, fluorinated monomers, oxygen-containing monomers and combinations thereof, preferably wherein the polar co -monomer is selected from the group consisting of HEMA, caprolactone acrylate and combinations thereof.

9. The method of claim 7, wherein the blowing agent is added to the styrenic co-polymer in a weight proportion ranging from 1 to 30 parts per 100 parts of styrenic material.

## Patentansprüche

1. Expandierbares Polystyrol, das umfasst:

   ein styrolisches Copolymer, das aus der Polymerisation einer Reaktionsmischung entsteht, das ein styrolisches Monomer und ein Comonomer umfasst, das eine polare funktionelle Gruppe umfasst, wobei das Comonomer, das eine polare Gruppe umfasst, in Mengen im Bereich von 0,01 bis 20 Gew.-% auf Basis des Gesamtgewichts der Reaktionsmischung vorhanden ist; und
   $CO_2$ als Treibmittel.

2. Expandierbares Polystyrol nach Anspruch 1, wobei das styrolische Monomer aus der Gruppe ausgewählt ist, bestehend aus Styrol, alpha-Methylstyrol, Vinyltoluol, p-Methylstyrol, t-Butylstyrol, o-Chlorstyrol, Vinylpyridin und beliebigen Kombinationen davon.

3. Expandierbares Polystyrol nach Anspruch 1, wobei das Comonomer, das eine polare funktionelle Gruppe umfasst, ein polares Monomer ist, das aus der Gruppe ausgewählt ist, bestehend aus HEMA, Estern, Caprolactonacrylaten, Alkylmethacrylaten, Ethern, Carbonsäuren, Silanen, 3-(Trimethoxysilyl)propylmethacrylat, fluorierten Monomeren, sauerstoffhaltigen Monomeren, Maleinsäureanhydrid (MAH), Butylacrylat, Butylmethacrylat und Kombinationen davon, vorzugsweise wobei das Comonomer, das eine polare funktionelle Gruppe umfasst, HEMA umfasst.

4. Expandierbares Polystyrol nach Anspruch 1, wobei das styrolische Copolymer in Mengen im Bereich von 80 bis 100 Gew.-% auf Basis des Gesamtgewichts des expandierbaren Polystyrols vorhanden ist.

5. Expandierbares Polystyrol nach Anspruch 1, wobei das Treibmittel in einem Gewichtsanteil im Bereich von 1 bis 30 Teilen pro 100 Teilen des styrolischen Materials in das expandierbare Polystyrol eingebunden ist.

6. Polystyrol, das aus dem expandierbaren Polystyrol nach Anspruch 1 erhalten wurde, das vorzugsweise in einen Gegenstand gebildet ist.

7. Verfahren zum Herstellen eines polaren Polystyrols, das umfasst:

   Kombinieren eines Styrolmonomers und eines polaren Comonomers, um eine Reaktionsmischung zu erhalten, wobei das polare Comonomer in Mengen im Bereich von 0,01 bis 20 Gew.-% auf Basis des Gesamtgewichts der Reaktionsmischung zur Reaktionsmischung hinzugefügt wird;
   Aussetzen der Reaktionsmischung gegenüber Polymerisationsbedingungen, um ein styrolisches Copolymer zu erhalten; und
   Kombinieren des styrolischen Copolymers mit einem Treibmittel, um eine schäumbare Mischung zu erhalten.

8. Verfahren nach Anspruch 7, wobei das polare Comonomer aus der Gruppe ausgewählt ist, bestehend aus HEMA, Estern, Caprolactonacrylat, Maleinsäureanhydrid (MAH), Butylacrylat, Butylmethacrylat, Alkylmethacrylaten, Ethern, 3-(Trimethoxysilyl)propylmethacrylat, Carbonsäuren, Silanen, fluorierten Monomeren, sauerstoffhaltigen Monomeren und Kombinationen davon, vorzugsweise wobei das polare Comonomer aus der Gruppe ausgewählt ist, bestehend aus HEMA, Caprolactonacrylat und Kombinationen davon.

9. Verfahren nach Anspruch 7, wobei das Treibmittel in einem Gewichtsanteil im Bereich von 1 bis 30 Teilen pro 100 Teilen Styrolmaterial zum styrolischen Copolymer hinzugefügt wird.

## Revendications

1. Polystyrène expansible comprenant :

   un copolymère styrénique résultant de la polymérisation d’un mélange réactionnel comprenant un monomère styrénique et un comonomère comprenant un groupe fonctionnel polaire, le comonomère comprenant un groupe fonctionnel polaire étant présent en des quantités allant de 0,01 à 20 % en poids par rapport au poids total du mélange réactionnel ; et
   du $CO_2$ servant d’agent d’expansion.

2. Polystyrène expansible selon la revendication 1, dans lequel le monomère styrénique est choisi dans le groupe constitué par le styrène, l'$\alpha$-méthylstyrène, le vinyltoluène, le p-méthylstyrène, le t-butylstyrène, l'o-chlorostyrène, la vinylpyridine, et l'une quelconque de leurs combinaisons.

3. Polystyrène expansible selon la revendication 1, dans lequel le comonomère comprenant un groupe fonctionnel polaire est un monomère polaire choisi dans le groupe constitué par le HEMA, les esters, les acrylates de caprolactone, les méthacrylates d'alkyle, les éthers, les acides carboxyliques, les silanes, le méthacrylate de 3-(triméthoxysilyl)propyle, les monomères fluorés, les monomères oxygénés, l'anhydride maléique (MAH), l'acrylate de butyle, le méthacrylate de butyle et leurs combinaisons, de préférence dans lequel le comonomère comprenant un groupe fonctionnel polaire comprend du HEMA.

4. Polystyrène expansible selon la revendication 1, dans lequel le copolymère styrénique est présent en des quantités allant de 80 à 100 % en poids par rapport au poids total du polystyrène expansible.

5. Polystyrène expansible selon la revendication 1, dans lequel l'agent d'expansion est incorporé dans le polystyrène expansible en une proportion en poids allant de 1 à 30 parties pour 100 parties du matériau styrénique.

6. Polystyrène obtenu à partir du polystyrène expansible de la revendication 1, qui est de préférence mis sous la forme d'un article.

7. Procédé pour préparer un polystyrène polaire comprenant les opérations consistant à :

combiner un monomère de styrène et un comonomère polaire pour obtenir un mélange réactionnel, le comonomère polaire étant ajouté au mélange réactionnel en des quantités allant de 0,01 à 20 % en poids par rapport au poids total du mélange réactionnel ;
soumettre le mélange réactionnel à des conditions de polymérisation pour obtenir un copolymère styrénique ; et
combiner le copolymère styrénique avec un agent d'expansion pour obtenir un mélange expansible.

8. Procédé selon la revendication 7, dans lequel le comonomère polaire est choisi dans le groupe constitué par le HEMA, les esters, l'acrylate de caprolactone, l'anhydride maléique (MAH), l'acrylate de butyle, le méthacrylate de butyle les méthacrylates d'alkyle, les éthers, le méthacrylate de 3-(triméthoxysilyl)propyle, les acides carboxyliques, les silanes, les monomères fluorés, les monomères oxygénés et leurs combinaisons, de préférence dans lequel le comonomère polaire est choisi dans le groupe constitué par le HEMA, l'acrylate de caprolactone et leurs combinaisons.

9. Procédé selon la revendication 7, dans lequel l'agent d'expansion est ajouté au copolymère styrénique en une proportion en poids allant de 1 à 30 parties pour 100 parties de matériau styrénique.

FIG. 1

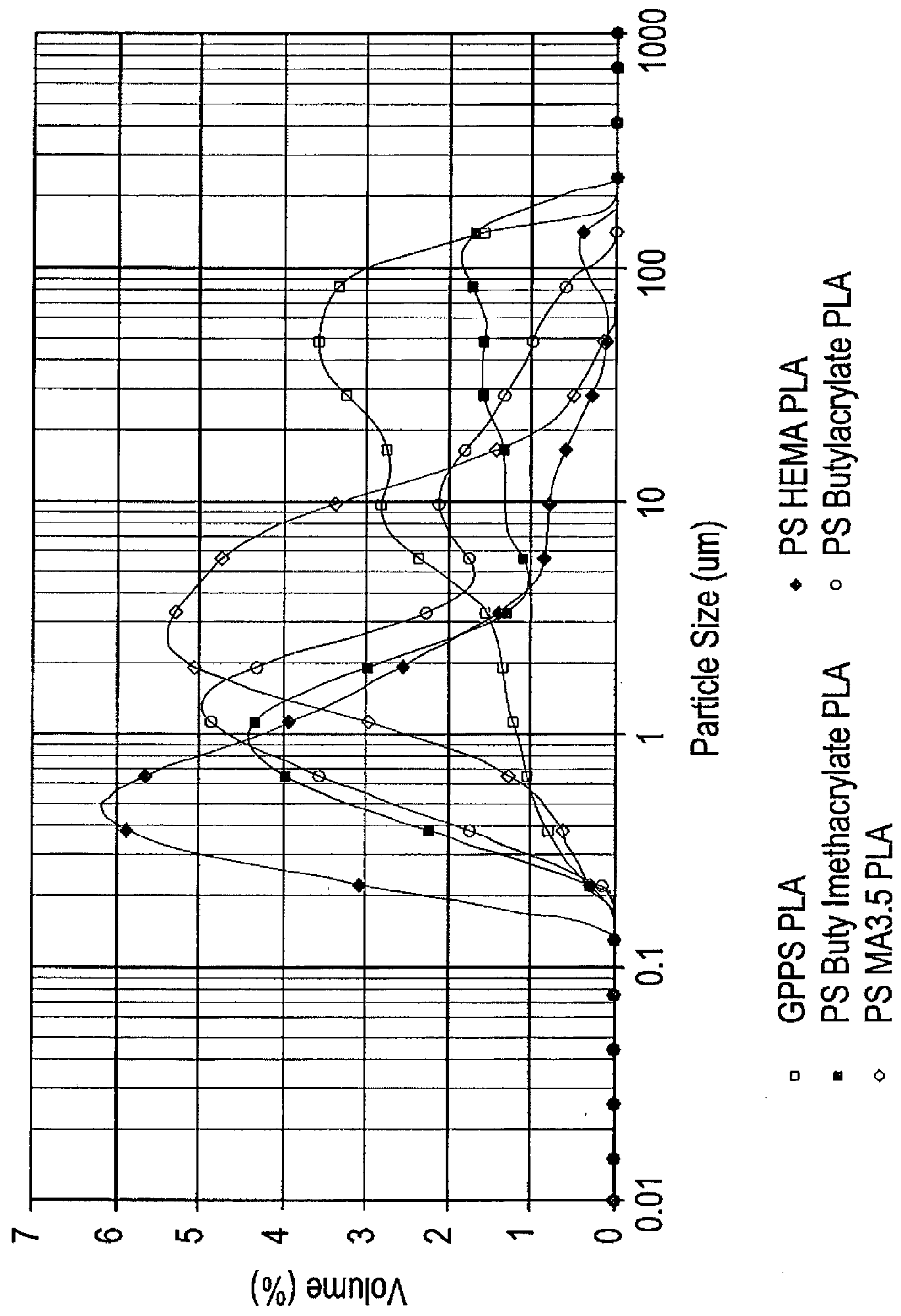
Volume (%)
0
1
2
3
4
5
6
7
0.01
0.1
1
10
100
1000
Particle Size (um)
GPPS PLA
PS Buty lmethacrylate PLA
PS MA3.5 PLA
PS HEMA PLA
PS Butylacrylate PLA

FIG. 2

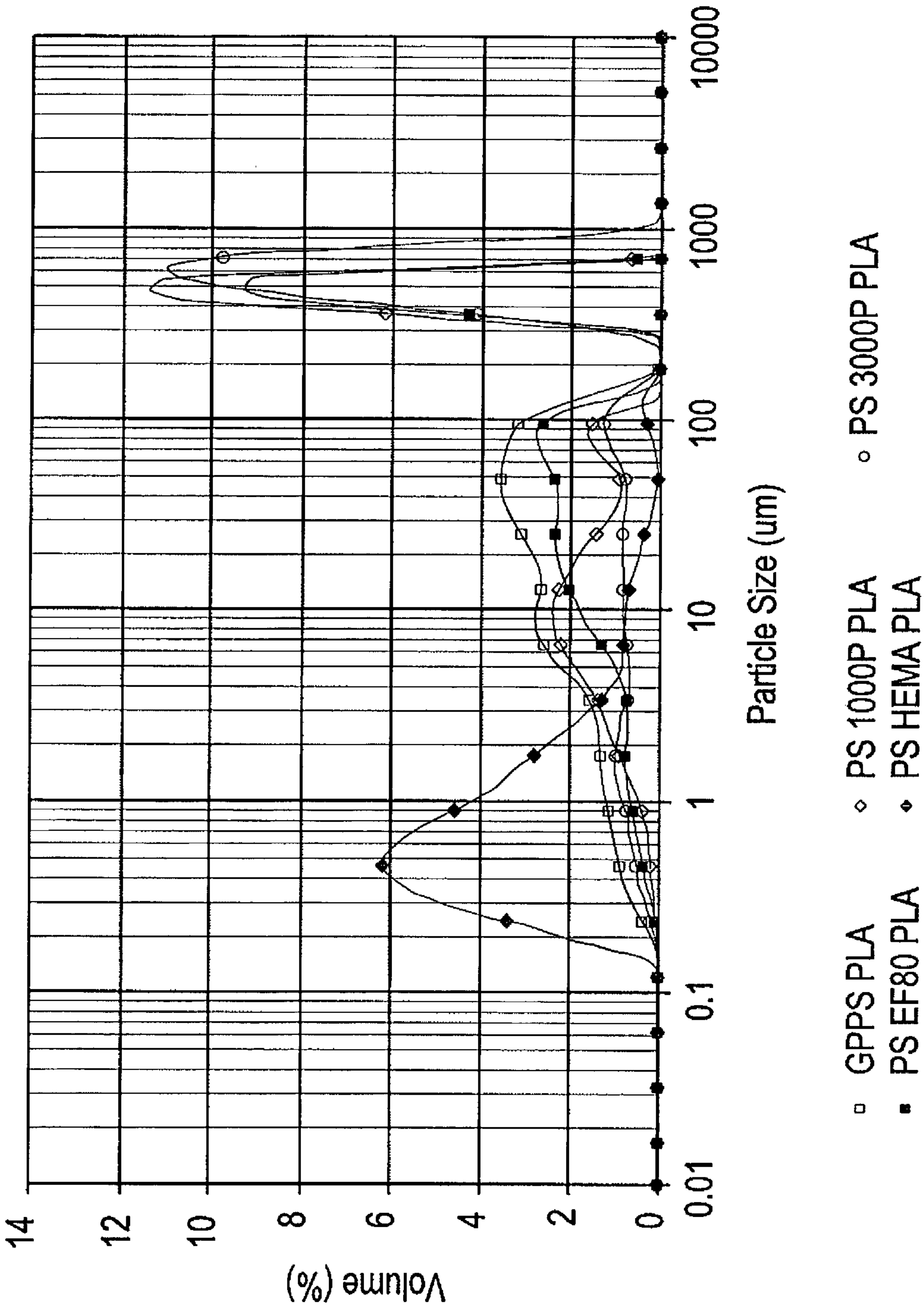
Volume (%)
0
2
4
6
8
10
12
14
0.01
0.1
1
10
100
1000
10000
Particle Size (um)
GPPS PLA
PS 1000P PLA
PS 3000P PLA
PS EF80 PLA
PS HEMA PLA

FIG. 3

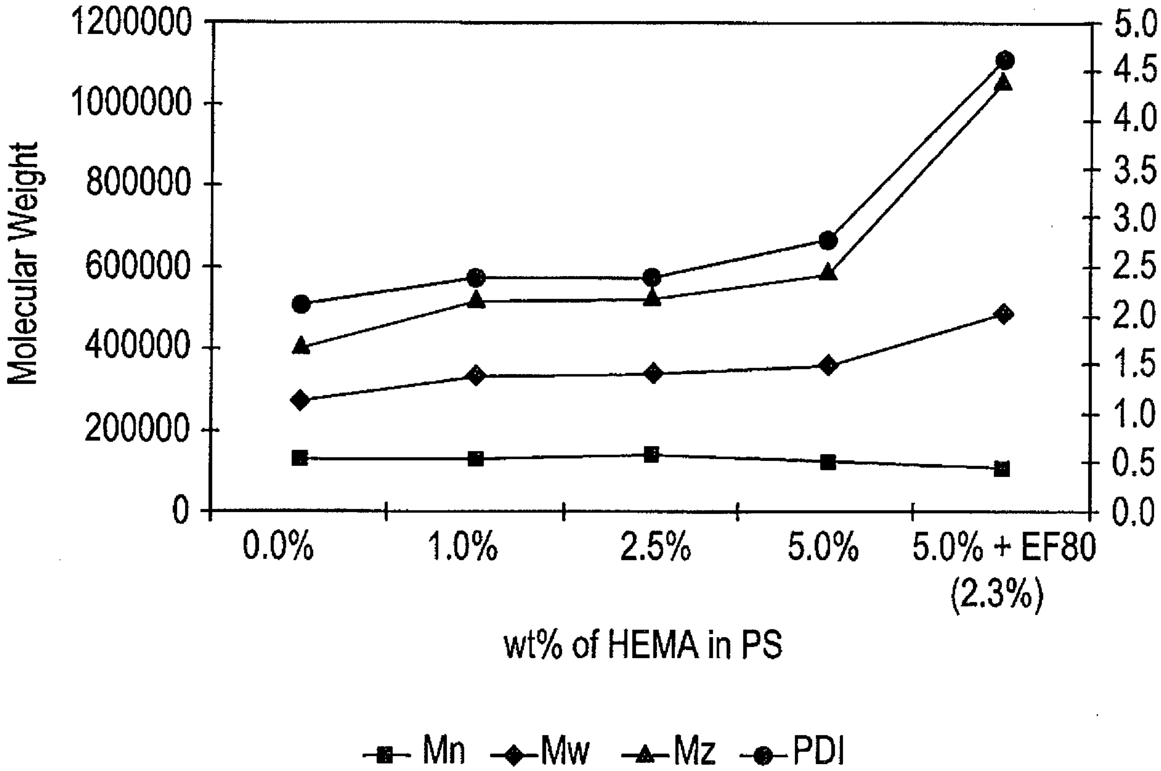
Molecular Weight
1200000
1000000
800000
600000
400000
200000
0
5.0
4.5
4.0
3.5
3.0
2.5
2.0
1.5
1.0
0.5
0.0
0.0%
1.0%
2.5%
5.0%
5.0% + EF80 (2.3%)
wt% of HEMA in PS
Mn
Mw
Mz
PDI

FIG. 4

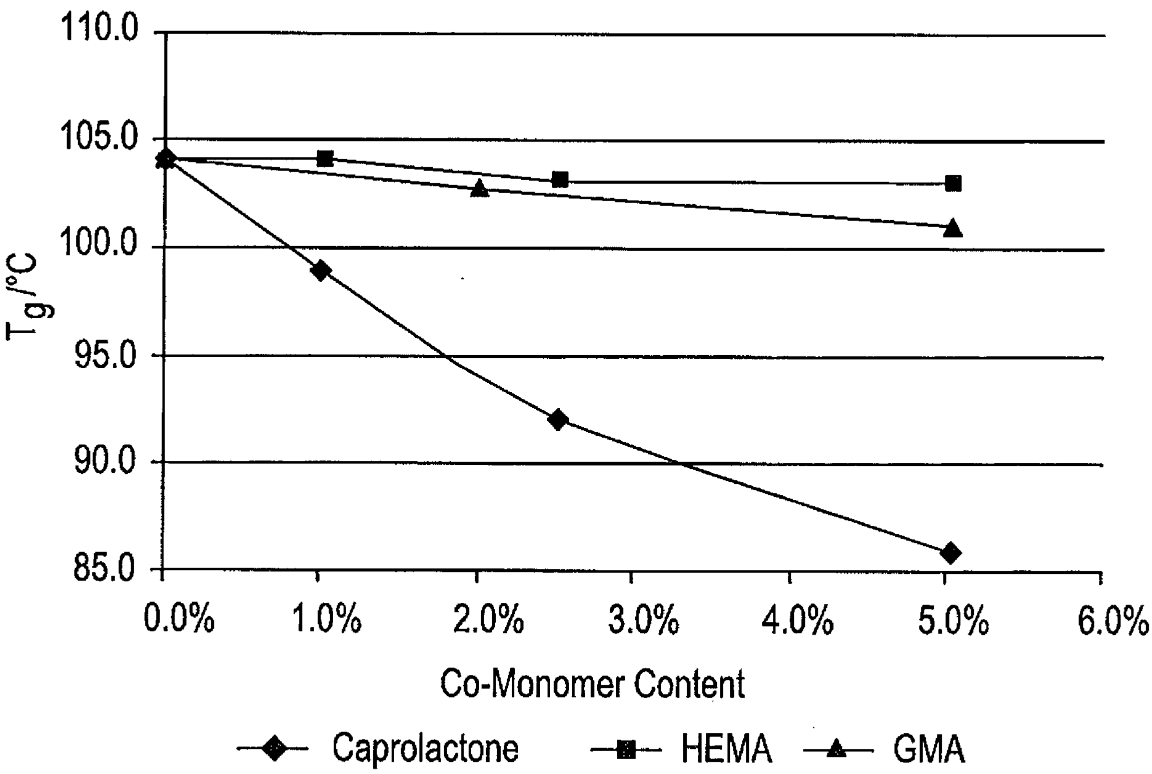
110.0
105.0
100.0
95.0
90.0
85.0
Tg /°C
0.0%
1.0%
2.0%
3.0%
4.0%
5.0%
6.0%
Co-Monomer Content
Caprolactone
HEMA
GMA

FIG. 5

Experimental Scheme of Dynamic Gravimetric Measurement of $CO_2$ Solubility

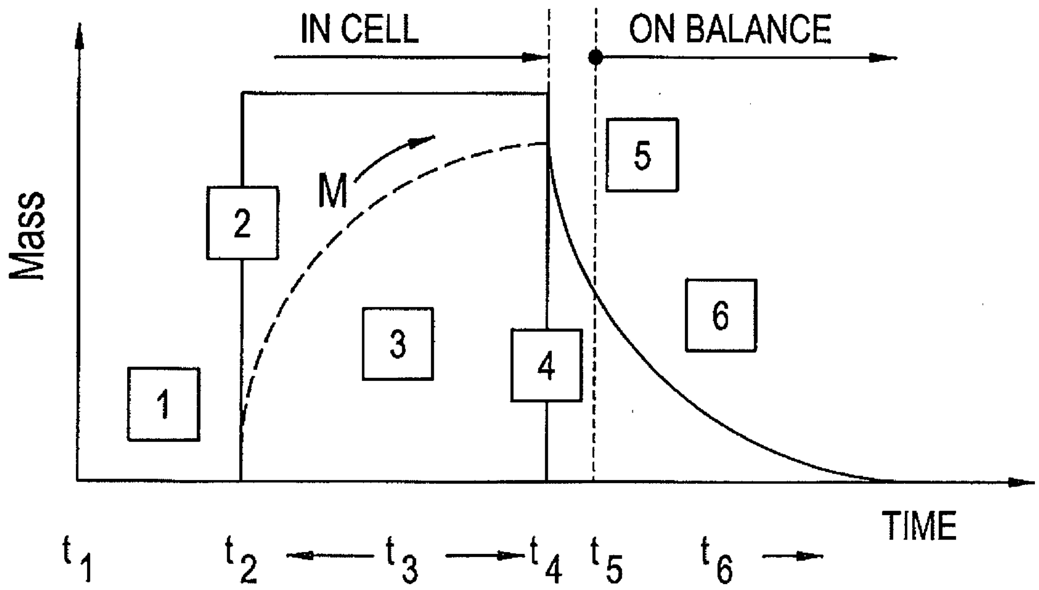

FIG. 6

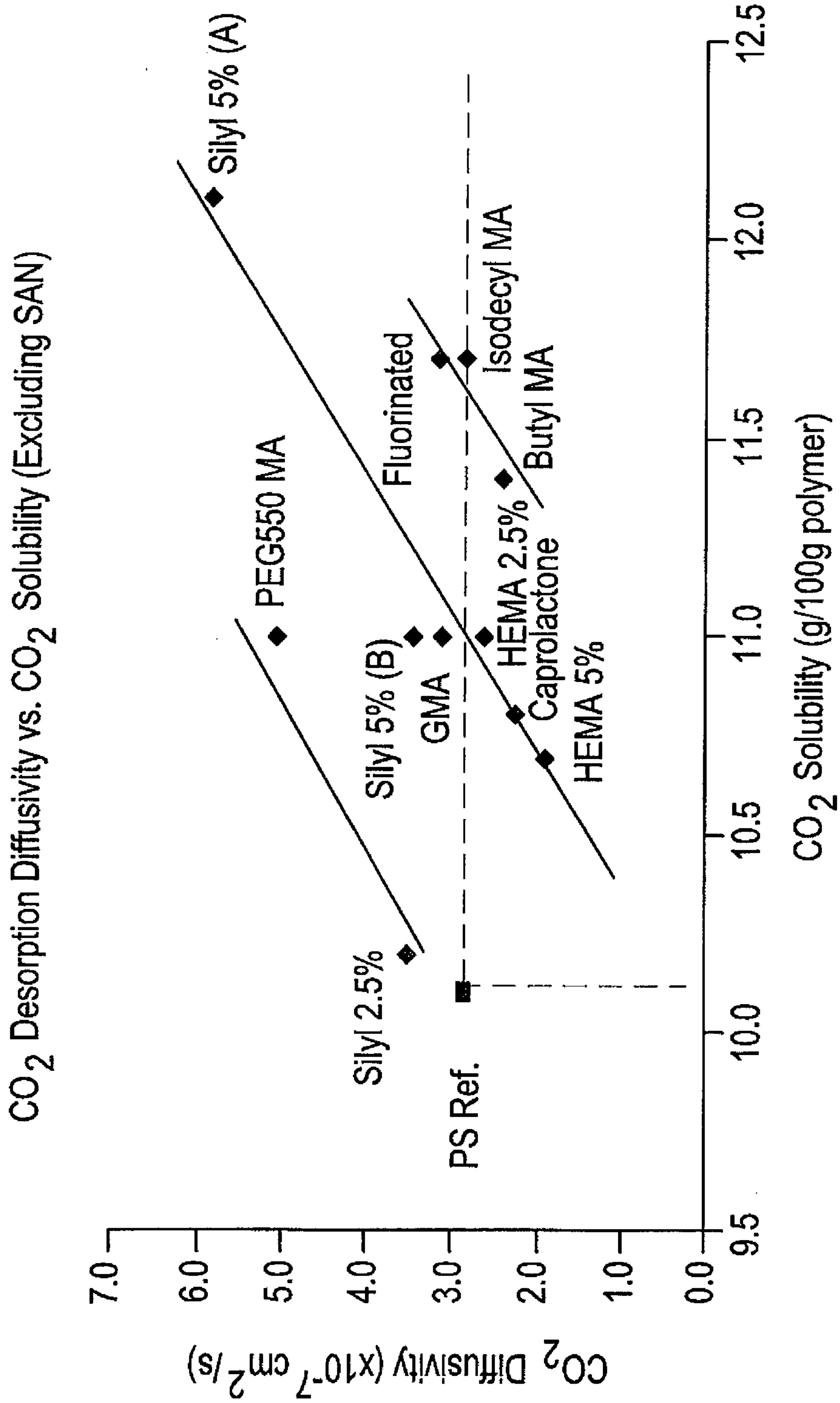

$CO_2$ Desorption Diffusivity vs. $CO_2$ Solubility (Excluding SAN)
$CO_2$ Diffusivity ($x10^{-7}$ $cm^2/s$)
$CO_2$ Solubility (g/100g polymer)
0.0
1.0
2.0
3.0
4.0
5.0
6.0
7.0
9.5
10.0
10.5
11.0
11.5
12.0
12.5
PS Ref.
Silyl 2.5%
Silyl 5% (B)
GMA
PEG550 MA
HEMA 2.5%
Caprolactone
HEMA 5%
Fluorinated
Butyl MA
Isodecyl MA
Silyl 5% (A)

FIG. 7

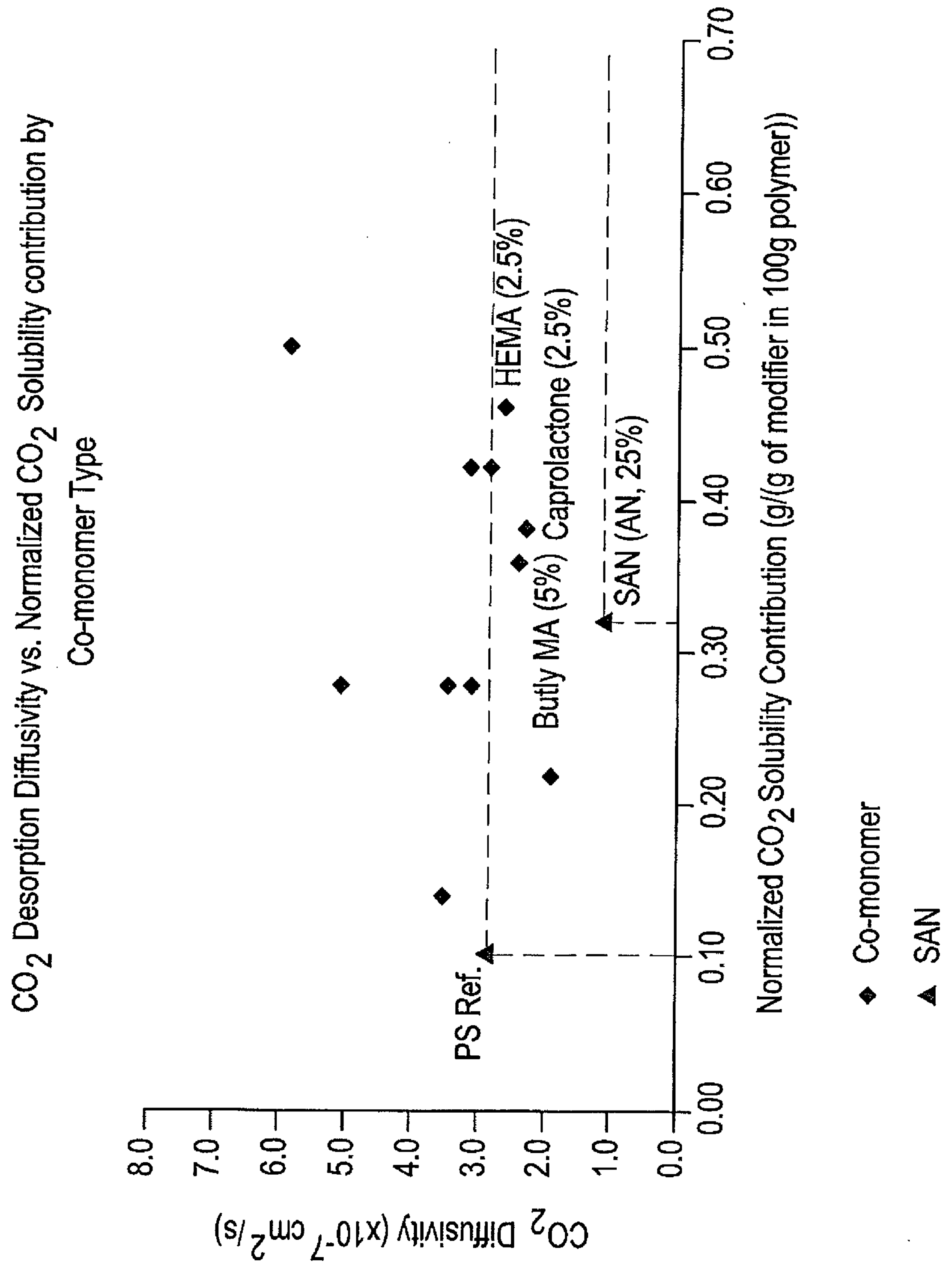
CO2 Desorption Diffusivity vs. Normalized CO2 Solubility contribution by Co-monomer Type
CO2 Diffusivity (x10-7 cm2/s)
8.0
7.0
6.0
5.0
4.0
3.0
2.0
1.0
0.0
0.00
0.10
0.20
0.30
0.40
0.50
0.60
0.70
Normalized CO2 Solubility Contribution (g/(g of modifier in 100g polymer))
PS Ref.
Butly MA (5%)
Caprolactone (2.5%)
HEMA (2.5%)
SAN (AN, 25%)
Co-monomer
SAN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4777210 A
- US 6706827 B, Lyu
- US 5540813 A, Sosa
- US 3660535 A, Finch
- US 3658946 A, Bronstert